# EUROPEAN PATENT SPECIFICATION

(11) **EP 0 597 244 B1**
(45) Date of publication and mention of the grant of the patent: **26.03.1997**
(21) Application number: 93116116.0
(22) Date of filing: 06.10.1993
(51) Int. Cl.: G21C 13/036, B23P 9/02

(54) **Process for reducing tensile welding stresses in a nozzle in a nuclear reactor shell**
Verfahren zur Entlastung von Zugspannungen durch Schweissen in einer Durchführung in einer Kernreaktorwandung
Procédé de réduction des contraintes de tension de soudage dans une traversée de paroi de réacteur nucléaire

(30) Priority: 13.11.1992 US 975727
(43) Date of publication of application: 18.05.1994
(73) Proprietor: AEA O'DONNELL, INC., Pittsburgh, Pennsylvania 15236 (US)
(72) Inventor: Porowski, Jan S., Pittsburgh, Pennsylvania 15208 (US)
(74) Representative: Schulmeyer, Karl-Heinz, Dr.

(56) References cited:
- DE-A- 3 443 047
- GB-A- 2 154 492
- GB-A- 2 170 562
- US-A- 3 918 288
- US-A- 5 196 160
- PATENT ABSTRACTS OF JAPAN vol. 16, no. 155 (P-1338) 16 April 1992; & JP-A-04 006 494
- PATENT ABSTRACTS OF JAPAN vol. 17, no. 163 (P-1513) 30 March 1993; & JP-A-04 326 090
- PATENT ABSTRACTS OF JAPAN vol. 4, no. 125 (M-30)(607) 3 September 1980; & JP-A-55 084 292

## Description

### BACKGROUND OF THE INVENTION

### 1. Field of the Invention

The invention relates to a process for reducing tensile welding stresses in nozzles in a nuclear reactor shell, said nuclear reactor shell having been provided with at least one nozzle extending through openings in said shell, said nozzle having been welded to said nuclear reactor shell through a weld lying on an inner surface of said nuclear reactor shell and the outer surface of said nozzle immediately adjacent thereto, said welding resulting in the generation of high tensile welding stresses in the wall of said nozzle adjacent to said weld.

### 2. Description of the Prior Art

Nuclear reactors are normally provided in the shell thereof, particularly in the head thereof, with nozzles generally extending substantially vertically through openings therein and which are circumferentially welded to said shell through a weld lying on the inner surface of said shell and on the outer surface of said nozzle immediately adjacent thereto. These nozzles, particularly when they extend through the head of a nuclear reactor, generally are made of alloys of nickel or stainless steel, such as an Inconel alloy, such as Inconel 600, provide for passage therethrough of control rod drive shafts attached to an exterior control rod drive mechanism. The tensile stresses generated from the weld holding the nozzle to the nuclear reactor head tend to facilitate stress corrosion crack formation in the inner surface of the nozzle in the vicinity of said weld. These cracks, in time, can extend upwardly into the body of the nozzle or into a portion of the weld, or both, into communication with the outer surface of the nozzle above the weld, into the space between the outer surface of the nozzle and the adjacent surface of the head opening, and then to the exterior of the reactor. Irradiated water can thus pass upwardly into the atmosphere, creating a serious pollution problem. If the cracks are circumferential, the nozzle can be detached from the reactor head by pressure in the reactor, also with damaging results.

From GB-A-2 154 492 a process is disclosed for improving the residual stresses in a weld metal, heat-affected zone and in the adjacent base metal of pipes or shells which comprises mechanically introducing compressive stresses in the weld metal zone and adjacent base metal higher than their individual yield strengths but not exceeding their individual ultimate strengths in compression. The mechanical means employed impose a controlled compressive deformation on their outer surface of the pipe or shell. Thus, the circumferential compressive deformation described in this prior citation is applied exclusively on the outer surface of the pipe or shell resulting in deformation of its outer surface.

From the Patent Abstracts of Japan, vol.4 no. 125, M-30,607 concerning JP-A-55-84292 (Hitachi Seisakusho) it is known to ease the residual stress of welded joint parts by applying pressure through an elastic material over the range of a fixed length to the inside surface of pipes. This is effected by imposing an axial compressive force on a pipe expanding medium made of elastic material which is compressed in its axial direction. As a result this medium is expanded in the radial direction so that the pipings and the butt weld zone between the pipings are force expanded in the radial direction to relieve the residual stress to the weld zone.

### Summary of the Invention

The invention is based on the problem to provide a process for reducing tensile welding stresses in a nozzle in a nuclear reactor shell which compared with the prior art mentioned above is of considerable benefit especially with respect to the efficiency of the process which results in a decrease of the time needed to remove the undesired tensile stresses and/or in minimizing the axial compressive loads.

It has been found that such problems in the nozzle arising from the tensile stresses generated in the wall of said nozzle adjacent to the weld holding said nozzle to said nuclear reactor shell, particularly a nuclear reactor head, can be substantially reduced by simultaneously applying axial compressive loads to the free ends of said nozzles and radial pressure imposed on the inner wall of said nozzles.

According to claim 1 of the invention this problem can be solved by a process for reducing tensile welding stresses in a nozzle in a nuclear reactor shell, said nuclear reactor shell having been provided with at least one nozzle extending through openings in said shell, said nozzle having been welded to said nuclear reactor shell through a weld lying on the inner surface of said nuclear reactor shell and the outer surface of said nozzle immediately adjacent thereto, said welding resulting in the generation of high tensile welding stresses in the wall of said nozzle adjacent to said weld. This process comprises applying simultaneously axial compressive loads on the free end face of said nozzle and radial pressure imposed on the inner wall of said nozzle wherein the high residual tensile stresses are located, in an amount sufficient to substantially reduce said welding stresses.

Preferred embodiments of the invention are characterized in the subclaims 2 to 6.

### BRIEF DESCRIPTION OF THE DRAWINGS

Figure 1 is an isometric view of a nuclear pressure reactor having a head provided with nozzles extending vertically therethrough into the body thereof;
Figure 2 is a side-elevational view, partly in section, of a portion of a nuclear reactor head showing two of the nozzles extending therethrough and welded thereto;
Figure 3 is a side-elevational view, partly in section, of a portion of a nuclear reach head showing one of the nozzles welded thereto and means for applying axial compressive loads on the free ends of said nozzle for substantially reducing tensile welding stresses in said nozzle; and
Figure 4 is also a side-elevational view, partly in section, of a portion of a nuclear reactor head showing one of the nozzles welded thereto and means for applying axial compressive loads on the free ends of said nozzle for substantially reducing tensile welding stresses in said nozzle as well as means for applying radial pressure on the inner surface of said nozzle in the location wherein the high residual tensile stresses generated by welding are located.

### BRIEF DESCRIPTION OF THE INVENTION

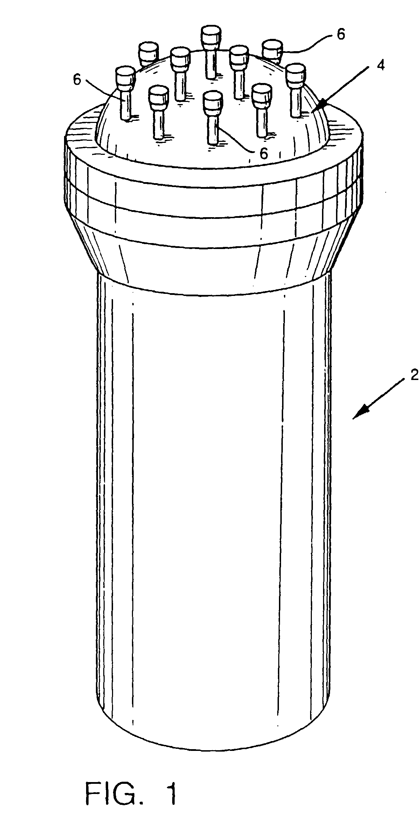

Referring to the drawings, reference numeral 2 In Figure 1 defines a nuclear reactor pressure vessel provided with a head 4 having openings through which a number of nozzles 6 extend substantially vertically into the interior of said vessel 2.

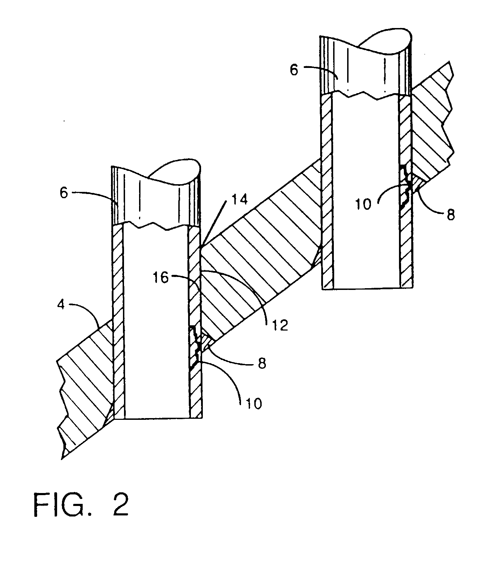

Referring to Figure 2, each of nozzles 6 is normally circumferentially welded to head 4 through a weld 8 immediately adjacent thereto. The corresponding outer adjacent surfaces of head 4 and nozzles 6 are normally not welded to each other. Since each of nozzles 6 is capped at an upper end thereof (see Figure 1), and is circumferentially welded to head 4, pressurized hot water in the reactor interior is normally retained therein. However, as discussed above, the weld 8 tends to generate tensile stresses in the inner surface of the nozzles 6 in the vicinity of such weld, which can, and quite often does, result in the formation of cracks 10 on said inner surface in the presence of pressurized hot water. These cracks 10, which are generally longitudinal in direction, can move outwardly and upwardly in the nozzle bulk, into a portion of the weld 8, or both. These cracks 10 as they move upwardly can grow and eventually can communicate with the outer surface of nozzle 6 above weld 8, so that pressurized water within the nuclear reactor can flow therethrough into the free space lying between the inner surface 12 of opening 14 in head 4 and the adjacent outer surface 16 of nozzle 2 into the atmosphere, thereby creating serious pollution problems in the atmosphere.

It has been found that such high tensile stresses generated by such welding in the nozzles can be substantially reduced by a simultaneous application of axial compressive loads on the free end faces of said nozzles and radial pressure imposed on the inner wall of said nozzles. If such a combination of axial compressive loads and radial pressure are so applied simultaneously to the nozzles 6 prior to the formation of cracks 10, the formation of such cracks is substantially inhibited. However, if such a combination of axial compressive loads and radial pressure are so applied simultaneously to the nozzles 6 after the formation of cracks 10, the further growth and propagation of such cracks is severely inhibited. In both cases, the problems arising from the existence of high tensile stresses generated by welding are greatly reduced. When cracks 10 have formed in the nozzles 6 as a result of the high tensile stresses and the axial compressive loads have been applied on the free ends of the nozzles and the radial pressure has been applied on the inner wall of said nozzles to substantially reduce such high tensile stresses, if desired to further avoid any problems that might still arise from the presence of cracks 10 in the nozzles 6, such cracks can be physically removed in any suitable manner, for example, by subjecting the inner surface thereof in the crack area to electrical discharge machining (EDH Process) or a grinding operation until the crack disappears and a clean surface is obtained. The operation of reducing the high tensile stresses in the nozzles 6 and the subsequent removal of the cracks 10 is obviously far superior to an operation wherein the cracks 10 are removed without reducing the high tensile stress. When reduction in tensile stresses is obtained and removal of cracks is then carried out, the formation of further cracks is greatly inhibited, whereas when cracks are removed, without reduction of residual welding stresses, the presence of such residual welding stresses will still tend to form such cracks, for the reasons fully set forth above.

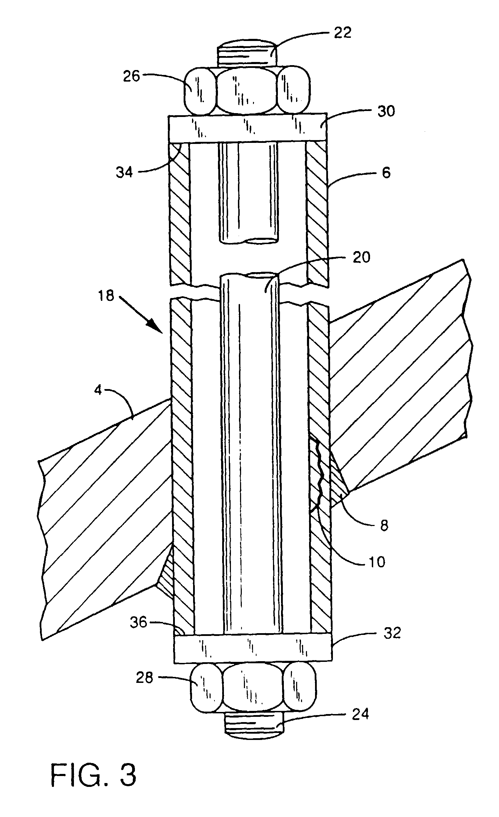

The application of axial compressive loads on the free ends of nozzles 6 to substantially reduce the high tensile stresses generated therein as a result of welds 8 can be affected in any suitable or convenient manner. One means for doing this is illustrated in Figure 3, wherein the device 18 comprises a shaft 20 having threads 22 and 24 on the extreme ends thereof carrying nuts 26 and 28, respectively, thereon and shoulders 30 and 32 freely disposed between the circumferential free ends 34 and 36 of nozzle 6 and nuts 26 and 28, respectively. To obtain the desired axial compressive loads the device 18 is merely placed in the position shown in Figure 3 and one or both of nuts 26 and 28 are rotated clockwise until the desired axial compressive load is applied to the free ends of nozzle 6 sufficient to substantially reduce the residual tensile welding stress in nozzle 6. The individual parts of the device 18, namely, shaft 20, nuts 26 and 28 and shoulders 30 and 32 are then removed from the nozzle 6.

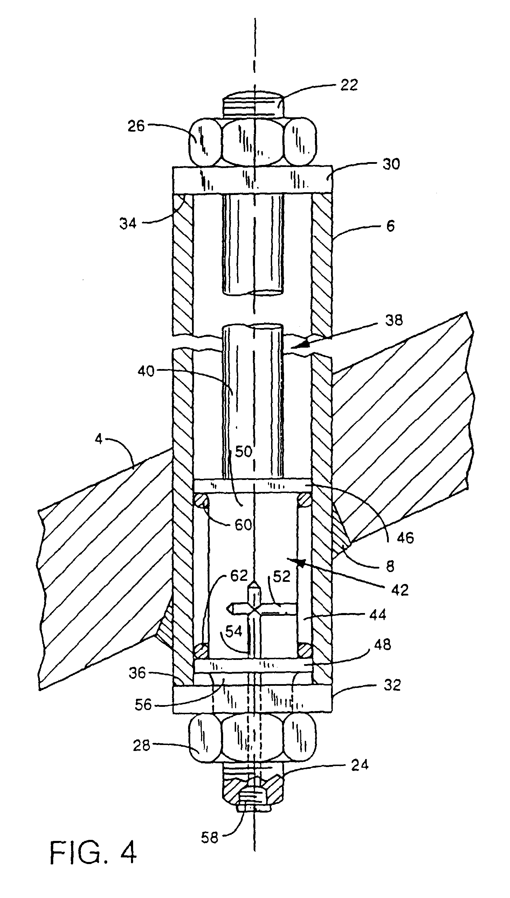

To minimize the possibility that under certain conditions of the design, or because of the materials of construction, of nozzle 6, the amount of axial compressive load necessary to obtain the desired reduction in residual welding stresses would be so great that buckling of nozzle 6 might occur, it has surprisingly been found that the necessary amount of the axial compressive load can be reduced by imposing simultaneously sufficient radial pressure on the inner surface of nozzle 6 wherein the high residual tensile stresses generated by the weld 8 are located, that is, generally the inner surface of nozzle 6 opposite weld 8. Such radial pressure can be imposed in any suitable or convenient manner. One such means is illustrated in Figure 4.

Referring to Figure 4, the device 38 shown therein is a modification of the device 18 used in Figure 3, which operates in the same manner as device 18 to obtain the desired axial compressive load but additionally provides means to obtain the desired radial pressure on the inner surface of nozzle 6 wherein the high residual tensile stresses generated by the weld 8 are located. In the modification of Figure 4, shaft 40 is provided with an enlarged radial lower end 42 which helps to define a chamber 44. This is accomplished by providing said enlarged lower end 42 with spaced-apart radial extensions 46 and 48 in close contact with the adjacent inner wall of nozzle 6 and a substantial radial portion 50 therebetween having a diameter smaller than the diameter of said spaced-apart radial extensions 46 and 48 sufficient to provide adequate space in the chamber 44 so formed to contain a fluid, such as an oil, natural or synthetic, or water. Chamber 44 communicates with the atmosphere through line 52 in the enlarged lower end 42 and then continuing through line 54 in the enlarged lower end 42 and the remaining lower end 56 of shaft 40. To provide means for introducing a fluid into chamber 44 by way of lines 52 and 54, the lower portion of line 54 is provided with an enlarged threaded tap hole 58 for attaching a line to a pressurized fluid source. To prevent leakage of fluid from chamber 44, the upper and lower portions thereof adjacent radial extensions 46 and 48 are provided with resilient seals 60 and 62, respectively. In the situation illustrated in Figure 4, the residual tensile stresses are shown not to have resulted in the product of cracks in the vicinity of the weld at the time of the operation defined herein has been caried out, although the operation in such situation would be similarly carried out had cracks previously occurred. Generally, according to the invention both of the pressure operations defined herein are carried out simultaneously.

The total applied loads and the corresponding stresses required herein to obtain the desired reduction in the welding stresses in the vicinity of the weld must be that amount sufficient to result in the plastic flow of the material in the region of the nozzle wherein the undesired welding stresses are to be reduced. By "plastic flow" the point is meant at which permanent deformation of the material being treated is obtained.

As an example of how a determination of the amount of axial compressive load that need be applied to the free ends (that is, onto the cross-sectional area of the free ends) of the nozzle can be calculated, the following guide can be used: axial compressive stress required (σₐ) equals the sum of the yield strength of the nozzle material (S_{y}) plus the desired reduction of the maximum tensile stress (Δσ) minus the maximum residual tensile stresses in the welded condition (σₘₐₓ) or${\text{(I) σ}}_{\text{a}} {\text{= S}}_{\text{y}} {\text{+ Δσ - σ}}_{\text{max}} \text{.}$ Thus σₘₐₓ can be in the range of about 207 bar (3000 psi) to about 8270 bar (120000 psi) tension, generally about 1034 bar (15000 psi) to about 5515 bar (80000 psi) tension. When the nozzle is Inconel 600, for example, σₘₐₓ can be in the range of about 2070 bar (30000 psi) to about 4140 (60000 psi) tension. With Stainless 304 σₘₐₓ can be in the range of about 1380 bar (20000 psi) to about 2760 bar (40000 psi) tension. S_{y} can be in the range of about 690 bar (10000 psi) to about 8270 bar (120000 psi), generally about 1380 bar (20000 psi) to about 5515 bar (80000 psi) . When the nozzle is Inconel 600, S_{y} can be in the range of about 2760 bar (40000 psi) to about 3790 bar (55000 psi). With Stainless 304 S_{y} can be in the range of about 1725 bar (25000 psi) to about 2415 bar (35000 psi). Δσ can be in the range of about 207 bar (3000 psi) to about 8270 bar (120000 psi), generally about 345 bar (5000 psi) to about 5515 bar (80000 psi). When the nozzle is Inconel 600 Δσ can be in the range of about 690 bar (10000 psi) to about 4140 (60000 psi). With Stainless 304 Δσ can be in the range of about 345 bar (5000 psi) to about 2760 bar (40000 psi).

With radial pressure applied on the inner surface of the nozzle in addition to the compressive load, as defined above, Equation (I) above still applies, but the required axial compressive load is reduced by the hoop stress (σₚ) generated by the pressure imposed on the inner wall of the nozzle adjacent, or opposite the weld area. The applicable formula then becomes the following:${\text{(II) σ}}_{\text{a}} {\text{= S}}_{\text{y}} {\text{+ Δσ - σ}}_{\text{max}} {\text{- σ}}_{\text{p}} \text{.}$

In Equation II σₘₐₓ, S_{y} and Δ_{σ} are the same as in Equation I. σₚ can be in the range of about 69 bar (1000 psi) to about 6900 bar (100000 psi) tension, generally about 138 bar (2000 psi) to about 4140 bar (60000 psi) tension. When the nozzle is Inconel 600, σₚ can be in the range of about 138 bar (2000 psi) to about 3450 bar (50000 psi) tension. With Stainless 304 σₚ can be in the range of about 138 bar (2000 psi) to about 2760 bar (40000 psi) tension.

### DESCRIPTION OF SPECIFIC EXAMPLES

The invention described and claimed herein can further be understood by reference to the following examples.

### EXAMPLE I (Comparison)

A nozzle made of Inconel 600 having a yield strength of 3790 bar (55000 psi), a length of 21,29 cm (8,38 inches), an outer diameter of 11,43 cm (4,50 inches) and an inner diameter of 8,28 cm (3,26 inches) was passed through an opening in a shell made of A-36 carbon steel and welded thereto. The welding operation resulted in the generation of welding tensile stresses in the wall thereof adjacent said weld rising to a maximum of about 3450 bar (50000 psi). Axial load was applied to the free cross-sectional ends of the nozzle, using apparatus similar to that illustrated in Figure 3, in the amount of about 2760 bar (40000 psi) for about 30 seconds. The apparatus was then promptly removed. The residual welding stresses in the nozzle wall adjacent the weld zone were reduced to 1034 bar (15000 psi) tension.

### EXAMPLE II (Comparison)

In this example a nozzle welded to a shell, identical to that used in Example I, was subjected to both an axial compressive load, as defined in Example I, and radial pressure on the inner surface of the nozzle in the zone wherein the high residual tensile welding stresses were located, using apparatus therefor similar to that illustrated in Figure 4. Compressed oil was used to impose pressure on the inner wall of the nozzle. An axial compressive load in the amount of 345 bar (5000 psi) was applied over a period of about 30 seconds, after which a radial pressure of 915 bar (13255 psi) tension was applied over a period of about 30 seconds to the inner surface of the nozzle in the zone wherein the high residual tensile stresses generated by welding were located. The residual welding stresses in the nozzle wall adjacent the weld zone were reduced to 1034 bar (15000 psi) tension.

## Claims

1. A process for reducing tensile welding stresses in a nozzle in a nuclear reactor shell, said nuclear reactor shell having been provided with at least one nozzle extending through openings in said shell, said nozzle having been welded to said nuclear reactor shell through a weld lying on the inner surface of said nuclear reactor shell and the outer surface of said nozzle immediately adjacent thereto, said welding resulting in the generation of high tensile welding stresses in the wall of said nozzle adjacent to said weld, which comprises applying simultaneously axial compressive loads on the free end face of said nozzle and radial pressure imposed on the inner wall of said nozzle wherein the high residual tensile stresses are located, in an amount sufficient to substantially reduce said welding stresses.

2. The process of claim 1 wherein said shell comprises a nuclear reactor head.

3. The process as defined in claim 1 or claim 2 wherein the amount of compressive load so applied is sufficient to cause permanent deformation of the material in the nozzle wherein said high tensile welding stresses are located.

4. The process as defined in any one of claims 1 to 3 wherein the maximum residual tensile stress is in the range of 207 bar (3000 psi) to about 8270 bar (120 000 psi) tension.

5. The process as defined in any one of claims 1 to 3 wherein the maximum residual tensile stress is in the range of 1034 bar (15000 psi) to about 5515 bar (80 000 psi) tension.

6. The process as defined in any one of claims 1 to 5 wherein said nozzle is made of alloys of nickel and stainless steel.

## Patentansprüche

1. Verfahren zur Verminderung von durch Schweißen verursachten Zugspannungen in einem Stutzen in einem Kernreaktormantel, der mit wenigstens einem durch Öffnungen in dem Mantel sich erstreckenden Stutzen versehen ist, wobei der Stutzen über eine Schweißnaht, die auf der Innenfläche des Kernreaktormantels und der unmittelbar benachbarten Außenfläche des Stutzens liegt, mit dem Kernreaktormantel verschweißt ist und die Verschweißung die Ausbildung hoher Zugspannungen in der der Schweißnaht benachbarten Wand des Stutzens zur Folge hat, dadurch gekennzeichnet, daß axiale Druckbeanspruchungen auf die freie Stirnseite des Stutzens und radialer Druck, ausgeübt auf die Innenwand des Stutzens, in der die hohen restlichen Zugspannungen liegen, gleichzeitig in einer Höhe angewandt werden, die ausreicht, um die Zugspannungen wesentlich zu vermindern.

2. Verfahren nach Anspruch 1, dadurch gekennzeichnet, daß der Mantel einen Kernreaktorkopf umfaßt.

3. Verfahren nach einem der Ansprüche 1 oder 2, dadurch gekennzeichnet, daß die Höhe der angewandten Druckbeanspruchung ausreicht, um eine permanente Deformation des die hohen Zugspannungen aufweisenden Stutzenmaterials zu bewirken.

4. Verfahren nach einem der Ansprüche 1 bis 3, dadurch gekennzeichnet, daß die maximale Rest-Zugspannung im Bereich von 207 bar (3000 psi) bis etwa 8270 bar (120 000 psi) liegt.

5. Verfahren nach einem der Ansprüche 1 bis 3, dadurch gekennzeichnet, daß die maximale Rest-Zugspannung im Bereich von 1034 bar (15 000 psi) bis etwa 5515 bar (80 000 psi) liegt.

6. Verfahren nach einem der Ansprüche 1 bis 5, dadurch gekennzeichnet, daß der Stutzen aus Legierungen von Nickel und nichtrostendem Stahl besteht.

## Revendications

1. Procédé de réduction des contraintes de traction résultant du soudage d'un ajutage sur l'enveloppe d'un réacteur nucléaire, ladite enveloppe du réacteur nucléaire ayant été dotée d'au moins un ajutage s'étendant à travers des ouvertures de ladite enveloppe, ledit ajutage ayant été soudé sur ladite enveloppe du réacteur nucléaire par l'intermédiaire d'une soudure située sur la surface intérieure de ladite enveloppe du réacteur nucléaire et la surface extérieure dudit ajutage étant immédiatement contiguë à celle-ci, ledit soudage entraînant la création de contraintes de traction élevées dans la paroi dudit ajutage contiguë à ladite soudure, le procédé comprenant l'application simultanée de charges de compression axiale sur la face d'extrémité libre dudit ajutage et d'une compression radiale imposée sur la paroi intérieure dudit ajutage, dans laquelle les fortes contraintes résiduelles de traction sont situées, dans une mesure suffisante pour réduire considérablement lesdites contraintes de soudage.

2. Procédé selon la revendication 1, dans lequel ladite enveloppe comprend une tête de réacteur nucléaire.

3. Procédé selon la revendication 1 ou la revendication 2, dans lequel la valeur de la charge en compression ainsi appliquée est suffisante pour provoquer une déformation permanente du matériau de l'ajutage 1à où lesdites contraintes de traction élevées dues au soudage sont situées.

4. Procédé selon l'une quelconque des revendications 1 à 3, dans lequel la contrainte résiduelle maximale en traction est dans la plage d'une traction de 207 bars (3000 psi) à environ 8270 bars (120000 psi).

5. Procédé selon l'une quelconque des revendications 1 à 3, dans lequel la contrainte de traction résiduelle maximale est dans la plage d'une traction de 1034 bars (15000 psi) à environ 5515 bars (80000 psi).

6. Procédé selon l'une quelconque des revendications 1 à 5, dans lequel ledit ajutage est réalisé en alliages de nickel et en acier inoxydable.
